# EUROPEAN PATENT APPLICATION

(11) **EP 4 810 934 A1**
(43) Date of publication of application: **23.09.2026**
(21) Application number: 25785969.4
(22) Date of filing: 15.04.2025
(51) Int. Cl.: G01M 99/00, F28C 1/00

(54) **COOLING-TOWER PERFORMANCE TESTING DEVICE AND METHOD**

(30) Priority: 30.05.2024 CN 202410691415
(71) Applicant: China Nuclear Power Engineering Co., Ltd., Shenzhen, Guangdong 518116 (CN)
(72) Inventor: YUAN, Meichun, Shenzhen, Guangdong 518116 (CN); WU, Jiabin, Shenzhen, Guangdong 518116 (CN); LIN, Jing, Shenzhen, Guangdong 518116 (CN); SHI, Shengli, Shenzhen, Guangdong 518116 (CN); HUI, Longwei, Shenzhen, Guangdong 518116 (CN)
(74) Representative: Westphal, Mussgnug & Partner, Patentanwälte mbB
(86) International application number: PCT/CN2025/089091
(87) International publication number: WO 2025/214505

(57) **Abstract**

A cooling-tower performance testing device, comprising: a first barrier member (11) arranged on a water output pipeline of an RIS-RHR heat exchanger (21); a heat-source obtaining assembly (12), which has a first end mechanically connected between the first barrier member (11) and a water outlet of the RIS-RHR heat exchanger (21) and a second end mechanically connected to an EHR gate valve (31); and a second barrier member (13), which is arranged on a pipeline connected between a water outlet of a PTR heat exchanger (51) and a hot-side water inlet of an ECS heat exchanger (41). The device enables an ECS to obtain a stable heat source from one loop, and supplies heat to the ECS heat exchanger (41), and a heat source is thus provided for carrying out a cooling-tower performance test, without temporarily laying a large number of pipelines, thereby omitting a large amount of pipeline disassembly and site restoration work, and also effectively shortening a test duration and reducing test costs. Further provided is a cooling-tower performance testing method.

## Description

### TECHNICAL FIELD

The present invention belongs to the technical field of cooling tower performance testing, and particularly relates to a cooling tower performance testing device and a method.

### BACKGROUND

The ECS system is one of the important systems for maintaining the safe operation of nuclear power plants. The seismic-resistant mechanical ventilation cooling tower (hereinafter referred to as cooling tower) in the ECS system is an important device for removing heat. In order to ensure the reliability of the ECS system, the performance testing of the cooling tower needs to be perform regularly to verify whether the performance of the cooling tower meets the safety standards.

In related technologies, the main methods for obtaining the heat source required for cooling tower performance testing include the following: 1. Using an auxiliary steam distribution system for heating, by installing temporary heat exchangers, pipelines, and water circulation loops to bring the heat source to the cooling tower. This method requires purchasing new temporary heat exchangers, resulting in high testing costs, and the disassembly of pipelines and on-site restoration before and after the test are time-consuming; 2. Using an auxiliary steam distribution system for steam heating, by laying temporary pipelines to bring steam to the heat exchanger of the waste liquid treatment system to heat the water in the temporary circulation loop, and then bringing the hot water to the cooling tower. This method not only affects the commissioning of the waste liquid treatment system, but also affects the cleanliness of the heat exchanger of the waste liquid treatment system after the test, and the disassembly of pipelines and on-site restoration before and after the test are time-consuming; 3. Using an off-site 1:1 model test to simulate the cooling tower performance testing, which has drawbacks such as high testing costs and long total testing cycle.

At present, nuclear power plants are in urgent need of a cooling tower performance testing solution that is low-cost, short-time consuming, and does not affect the operation of other systems.

### SUMMARY OF THE INVENTION

The technical problem to be solved by the present invention is to provide a cooling tower performance testing device and a method.

The technical solution adopted by the present invention to solve the above technical problem is to provide a cooling tower performance testing device, including:

A first barrier member, provided on an outlet water pipe of a RIS-RHR heat exchanger, used to block delivery of cooling water heated by the RIS-RHR heat exchanger to a downstream pipe of an outlet water pipe of the RIS-RHR heat exchanger during performance testing;

A heat source acquisition assembly, a first end of which mechanically connected between the first barrier member and a water outlet of the RIS-RHR heat exchanger, a second end of which mechanically connected to an EHR gate valve, used to acquire the cooling water output by the RIS-RHR heat exchanger during the performance testing so that the cooling water is delivered to a hot side water inlet of an ECS heat exchanger through an outlet water pipe of the EHR gate valve; and

A second barrier member, provided on the pipeline between a water outlet of a PTR heat exchanger and the hot side water inlet of the ECS heat exchanger, used to prevent cooling water from flowing back to the water outlet of the PTR heat exchanger during performance testing.

Preferably, the heat source acquisition assembly includes:

A first valve, a first end of which mechanically connected between the first barrier member and the water outlet of the RIS-RHR heat exchanger, and a second end of which mechanically connected to a valve core outlet of the EHR gate valve.

Preferably, the first end of the first valve is mechanically connected to a valve core outlet of a RIS check valve disposed between the first barrier member and the water outlet of the RIS-RHR heat exchanger.

Preferably, the heat source acquisition assembly further includes a second valve; the second end of the first valve is mechanically connected to the valve core outlet of the EHR gate valve through the second valve;

The cooling tower performance testing device further includes:

A third barrier member, detachably mounted within an EHR restriction orifice, used to block the flow of cooling water from ECS loop back through an EHR heat exchanger to the hot side water inlet of the ECS heat exchanger during performance testing; and

A fourth barrier member, provided on the outlet water pipe of the EHR restriction orifice to prevent cooling water from flowing back to a water inlet of a RRI main pump through a water inlet of the EHR gate valve during the performance testing.

Preferably, the first valve and the second valve are mechanically connected through a DN300 pipe.

Preferably, the third barrier member is a blind plate; and/or, the first barrier member, the second barrier member and the fourth barrier member are electric valves.

Preferably, the first valve and the second valve are flanged valves respectively.

Preferably, the cooling tower performance testing device further includes:

A fifth barrier member, provided between a sixth valve and a first EHR inlet valve, used to prevent cooling water output from a hot side water outlet of the ECS heat exchanger from flowing back to a water outlet of a RRI heat exchanger during the performance testing, thereby allowing the cooling water to flow back to the water inlet of the RRI main pump through the PTR heat exchanger and a PTR outlet valve.

This invention also provides a cooling tower performance testing method, including the following steps:

S10. constructing a heat transfer path that provides heat source required for the performance testing of ECS cooling tower using the cooling tower performance testing device;

S20. setting an operating status of the cooling tower;

S30. controlling an inlet water temperature of the cooling tower by controlling an operating status of RIS system and/or a primary circuit water temperature;

S40. obtaining measured operating condition data of the cooling tower;

S50. analyzing the measured operating condition data and outputting the cooling tower testing results.

Preferably, controlling the inlet water temperature of the cooling tower includes: controlling the inlet water temperature between 52.7°C and 54.51°C.

Preferably, setting the operating state of the cooling tower includes:

Setting circulating water volume and a water baffle plate status of the cooling tower; wherein, the setting range of the circulating water volume is 270t/h to 330t/h, and the water baffle status is either with a water baffle or without a water baffle.

Preferably, the measured operating condition data includes an ambient dry-bulb temperature, an ambient wet-bulb temperature, an atmospheric pressure, a measured circulating water flow rate, an inlet water temperature, an outlet water temperature;

Analyzing the measured operating condition data includes:

Calculating a calculated water temperature difference based on the ambient dry-bulb temperature, the ambient wet-bulb temperature, the atmospheric pressure, the measured circulating water flow rate and the inlet water temperature;

Calculating a cooling capacity coefficient used to evaluate the actual cooling capacity of the cooling tower based on the calculated water temperature difference, the inlet water temperature and the outlet water temperature.

Preferably, the measured operating condition data further includes an inlet air flow rate, an inlet dry-bulb temperature, an inlet wet-bulb temperature, an outlet dry-bulb temperature, and an outlet wet-bulb temperature;

Analyzing the measured operating condition data further includes:

Calculating a thermal balance error used to evaluate the thermal balance performance of the cooling tower based on the inlet air flow rate, the inlet dry-bulb temperature, the inlet wet-bulb temperature, the measured circulating water flow rate, the outlet dry-bulb temperature and the outlet wet-bulb temperature.

Preferably, analyzing the measured operating condition data further includes:

Calculating a cooling number used to evaluate the cooling performance of the cooling tower based on the inlet water temperature, the outlet water temperature, the inlet air flow rate, the inlet dry-bulb temperature, the inlet wet-bulb temperature, the outlet dry-bulb temperature and the outlet wet-bulb temperature.

Preferably, the measured operating condition data further includes the cooling tower spray fill volume;

Analyzing the measured operating condition data further includes:

Calculating a volumetric dispersion coefficient of the cooling tower based on the measured circulating water flow rate, the cooling tower spray fill volume and the cooling number.

Preferably, the measured operating condition data further includes water drenching density, N sets of drift water data obtained by multiple collections based on the filter paper weighing method, and filter paper area; wherein, each set of drift water data includes the filter paper weight before each water droplet collection, the filter paper weight after each water droplet collection, the sampling time of each water droplet collection, and the drift water volume of each water droplet collection;

Analyzing the measured operating condition data further includes:

Calculating a drifting ratio of the cooling tower based on the water drenching density, the filter paper area, and N sets of drift water data.

Preferably, the measured operating condition data further includes fan inlet face pressure, fan outlet face pressure, fill bottom face pressure, fill top face pressure, drift eliminator face pressure, cooling tower outlet face pressure, outlet water temperature face pressure;

Analyzing the measured operating condition data further includes:

Calculating resistance of each component of the cooling tower sequentially based on the fan inlet face pressure, the fan outlet face pressure, the fill bottom face pressure, the fill top face pressure, the drift eliminator face pressure, the cooling tower outlet face pressure, and the outlet water temperature face pressure;

Preferably, a cooling tower performance testing method further includes:

S60. judging whether all testing items in the predetermined testing items have been tested, if so, ending the test; otherwise, resetting the operating status of the cooling tower based on the uncompleted testing items in the predetermined testing items and returning to S30;

The present invention has the following advantages: it provides a cooling tower performance testing device that enables the ECS system to acquire a stable heat source from the primary circuit to supply heat to the ECS cooling tower, thereby providing a continuous and stable heat source for the cooling tower performance testing. Moreover, it eliminates the need to temporarily lay a large number of pipelines during the test, which not only saves a lot of pipeline disassembly and on-site restoration work, but also effectively avoids affecting the commissioning test of other systems, thereby effectively shortening the main construction period and reducing the testing cost.

### BRIEF DESCRIPTION OF THE DRAWINGS

The present invention will be further described below in conjunction with accompanying drawings and embodiments. In the drawings,
FIG. 1 is a structural schematic diagram of various heat exchange systems in a nuclear power plant according to the present invention;
FIG. 2 is a structural schematic diagram of the cooling tower performance testing device in some embodiments of the present invention;
FIG. 3 is a location diagram of a cooling tower in a nuclear power plant at different testing faces; and
FIG. 4 is a flowchart of the cooling tower performance testing method in some embodiments of the present invention.

### DESCRIPTION OF THE EMBODIMENTS

To provide a clearer understanding of the technical features, objectives, and effects of the present invention, specific embodiments of the present invention will now be described in detail with reference to the accompanying drawings.

In the following description, it should be understood that the orientations or positional relationships indicated by terms such as "front", "rear", "up", "down", "left", "right", "longitudinal", "transverse", "vertical", "horizontal", "top", "bottom", "inner", "outer", "head", and "tail" are based on the orientations or positional relationships shown in the accompanying drawings, and are constructed and operated in a specific orientation. They are only for the convenience of describing this technical solution and do not indicate that the device or component referred to must have a specific orientation. Therefore, they should not be construed as limitations on the present invention.

It should be noted that this invention is applied to nuclear power plants, which are equipped with various heat exchange systems, including RRI systems (i.e., component cooling water systems), RIS systems (i.e., safety injection systems), ECS systems (i.e., extra cooling systems), PTR systems (i.e., fuel pool cooling and purification systems), and EHR systems (i.e., containment heat removal systems), etc.

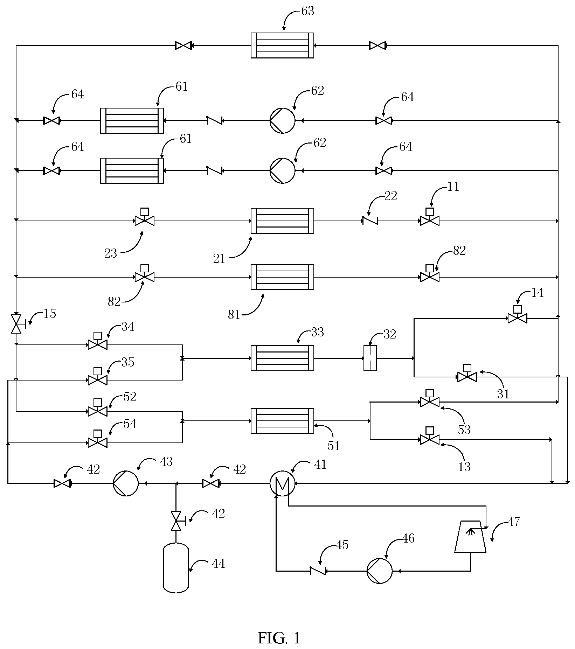

Referring to FIG. 1, the RRI system includes components such as an RRI pump motor 63, two rows of RRI heat exchangers 61, two rows of RRI main pumps 62, and multiple third valves 64 provided on the cooling water pipeline of the RRI system. The connection structure between the components in the RRI system can be referred to FIG. 1. The working principle of the RRI system can be referred to the existing technology, and will not be described in detail here.

The RIS system includes components such as a RIS-RHR heat exchanger 21, a RIS check valve 22, and a fourth valve 23. The connection structure between the components in the RIS system can be referred to FIG. 1 and its working principle can be referred to the existing technology, and will not be described in detail here.

The ECS system includes components such as an ECS heat exchanger 41, an ECS intermediate loop circulation pump 43, a pressurization tank 44, an ECS terminal loop check valve 45, an ECS terminal loop circulation pump 46, a cooling tower 47, and multiple fifth valves 42. The connection structure between the components in the ECS system can be referred to FIG. 1. The working principle of heat dissipation using cooling tower 47 can be referred to existing technology and will not be described in detail here.

The PTR system includes components such as a PTR heat exchanger 51, a first PTR inlet valve 52, a PTR outlet valve 53, and a second PTR inlet valve 54. The connection structure between the components in the PTR system can be referred to FIG. 1, and its working principle can be referred to the existing technology, which will not be described in detail here.

The EHR system includes components such as an EHR gate valve 31, an EHR restriction orifice 32, an EHR heat exchanger 33, a first EHR inlet valve 34 and a second EHR inlet valve 35. The connection structure between the components in the PTR system can be referred to FIG. 1, and its working principle can be referred to the existing technology, which will not be described in detail here.

Referring to FIG. 1, the various heat exchange systems are also provided with a public user equipment 81 (an equipment used to acquire heat from the primary circuit and operate), a sixth valve 82, and a seventh valve 83. The connection structure between the common user equipment 81, the sixth valve 82, and the seventh valve 83 and each heat exchange system can be seen in FIG. 1, and will not be described in detail here.

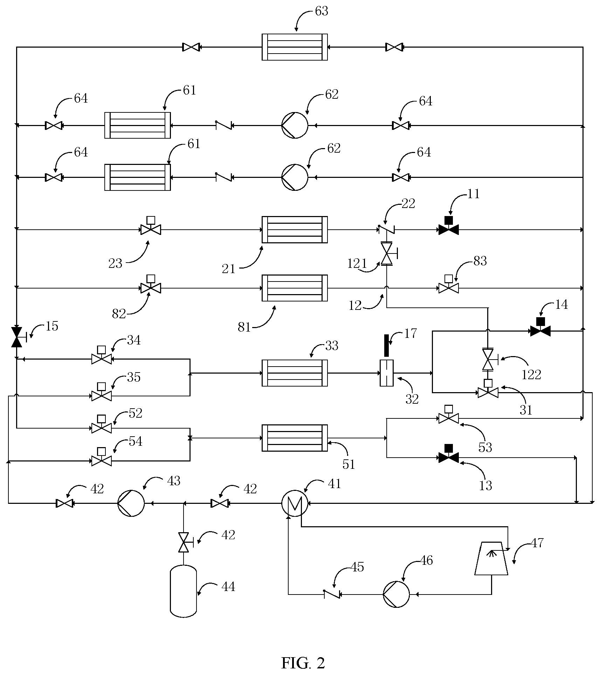

FIG. 2 is a structural schematic diagram of the cooling tower performance testing device in some embodiments of the present invention. This system enables the ECS system to acquire a stable heat source from the primary circuit to supply heat to the ECS cooling tower 47, thereby providing a continuous and stable heat source for the cooling tower performance testing. Moreover, it eliminates the need to temporarily lay a large number of pipelines during the test, which not only saves a lot of pipeline disassembly and on-site restoration work, but also effectively avoids affecting the commissioning test of other systems, thereby effectively shortening the testing period and reducing the testing cost. As shown in FIG. 1, the cooling tower performance testing device includes a first barrier member 11, a heat source acquisition assembly 12, and a second barrier member 13.

The first barrier member 11 is provided on the outlet water pipe of the RIS-RHR heat exchanger 21. The first barrier member 11 is used to block delivery of the cooling water heated by the RIS-RHR heat exchanger 21 to a downstream pipe of an outlet water pipe of the RIS-RHR heat exchanger 21 during performance testing. Specifically, the first barrier member 11 will be closed during the performance testing, which will block the delivery of cooling water to the downstream pipe of the outlet water pipe of the RIS-RHR heat exchanger 21, so that the cooling water output by the RIS-RHR heat exchanger 21 flows only to the heat source acquisition assembly 12.

The first end of the heat source acquisition assembly 12 is mechanically connected between the first barrier member 11 and the water outlet of the RIS-RHR heat exchanger 21, and the second end of the heat source acquisition assembly 12 is mechanically connected to the valve core outlet of the EHR gate valve 31. The heat source acquisition assembly 12 is used to acquire the cooling water output by the RIS-RHR heat exchanger 21 during performance testing, so that the cooling water is delivered to the hot side water inlet of the ECS heat exchanger 41 through the outlet water pipe of the EHR gate valve 31. Specifically, the first end of the heat source acquisition assembly 12 is mechanically connected between the water inlet of the first barrier member 11 and the water outlet of the RIS-RHR heat exchanger 21, so that after the first barrier member 11 is closed, cooling water can only flow into the heat source acquisition assembly 12. The second end of the heat source acquisition assembly 12 is mechanically connected to the EHR gate valve 31, so that the cooling water flows from the heat source acquisition assembly 12 to the EHR gate valve 31, and then the cooling water is delivered to the hot side water inlet of the ECS heat exchanger 41 through the outlet water pipe of the EHR gate valve 31. Then the heat will be transferred to the cold side of the ECS heat exchanger 41, and the ECS terminal loop circulation pump 46 will drive the hot water circulation on the cold side of the ECS heat exchanger 41. In this way, the cooling tower will acquire the heat required for the performance testing.

The second barrier member 13 is provided on the pipeline between the water outlet of the PTR heat exchanger 51 and the hot side water inlet of the ECS heat exchanger 41. The second barrier member 13 is used to prevent cooling water from flowing back to the water outlet of the PTR heat exchanger 51 during the thermal performance testing. Specifically, the first barrier member 11 will be closed during the performance testing, which will prevent the hot water input to the hot side water inlet of the ECS heat exchanger 41 from flowing back to the water outlet of the PTR heat exchanger 51, so as to avoid the heat input to the cooling tower being diverted, thereby ensuring that there is enough heat to carry out the cooling tower performance testing.

This embodiment requires relatively little modification to the existing heat exchange system. By simply providing a few components, the hot side of the ECS heat exchanger 41 can acquire hot water at a suitable temperature from the RRI system, thereby providing the cooling tower with a stable heat source required for performance testing. This not only effectively shortens the testing period but also reduces the testing cost.

In some embodiments, as shown in FIG. 2, the heat source acquisition assembly 12 includes a first valve 121. The first end of the first valve 121 is mechanically connected between the first barrier member 11 and the water outlet of the RIS-RHR heat exchanger 21, and the second end of the first valve 121 is mechanically connected to the EHR gate valve 31. The first valve 121 is used to controllably enable or disable water flow of in the heat source acquisition assembly 12.

In some embodiments, the first end of the first valve 121 is mechanically connected to the valve core outlet of the RIS check valve 22, wherein the RIS check valve 22 is disposed on the outlet water pipe between the first barrier member 11 and the water outlet of the RIS-RHR heat exchanger 21.

Specifically, the first valve 121 can be a flanged valve. Before installing the heat source acquisition assembly 12, the valve core of the RIS check valve 22 can be disassembled first. In this way, the valve core outlets of the first valve 121 and the RIS check valve 22 can be directly mechanically connected through the flange. That is, in this embodiment, there is no need to perform processes such as cutting and welding on the pipeline between the first barrier member 11 and the water outlet of the RIS-RHR heat exchanger 21, and cooling water can be taken from the water outlet of the RIS-RHR heat exchanger 21. This can reduce the workload required for disassembly, modification of pipelines and on-site restoration, and ensure the integrity of the outlet water pipeline of the RIS-RHR heat exchanger 21, thereby minimizing the impact of performance testing on the RIS system and helping to ensure the stability and reliability of the RIS system.

In some embodiments, as shown in FIG2, the heat source acquisition assembly 12 further includes a second valve 122, and the cooling tower performance testing device further includes a third barrier member 17 and a fourth barrier member 14. The second end of the first valve 121 is mechanically connected to the valve core outlet of the EHR gate valve 31 via the second valve 122; the third barrier member 17 is detachably disposed in the EHR restriction orifice 32, and the third barrier member 17 is used to close during the performance testing to block the cooling water of the ECS loop from flowing back to the hot side water inlet of the ECS heat exchanger 41 via the EHR heat exchanger 33; the fourth barrier member 14 is provided on the outlet water pipe of the EHR restriction orifice 32, and the fourth barrier member 14 is used to close during the performance testing to block the cooling water from flowing back to the inlet of the RRI main pump 62 via the water inlet of the EHR gate valve 31.

Specifically, the second valve 122 can be a flanged valve. Before installing the heat source acquisition assembly 12, the valve core of the EHR gate valve 31 can be disassembled first. In this way, the outlets of the second valve 122 and the EHR gate valve 31 can be directly mechanically connected through a flange, That is, in this embodiment, there is no need to perform processes such as cutting and welding on the pipeline. This allows cooling water from the heat source acquisition assembly 12 to be input into the EHR gate valve 31, further ensuring the integrity of the pipeline of existing heat exchange system. Then, to prevent cooling water from the heat source acquisition assembly 12 from flowing back to the outlet water pipes of EHR heat exchanger 33 and EHR restriction orifice 32 via the water inlet of EHR gate valve 31. In this embodiment, during the performance testing, on the one hand, the third barrier member 17 is used to block the EHR restriction orifice 32, thereby preventing the cooling water of the ECS loop from flowing back to the hot side water inlet of ECS heat exchanger 41 via EHR heat exchanger 33; on the other hand, the fourth barrier member 14 is closed to prevent the cooling water from flowing back to the inlet of RRI main pump 62. It should also be noted that in nuclear power plants, since the RIS check valve 22 and the EHR gate valve 31 are generally disposed in the same room, the heat source acquisition assembly 12 can be disposed in the same room, which contributes to shorten the pipeline between the first valve 121 and the second valve 122, and provides great convenience for the temporary laying of the heat source acquisition assembly 12.

Optionally, the third barrier member 17 is a blind plate.

In order to avoid the flow rate of cooling water flowing into the heat source acquisition assembly 12 being affected due to pipeline with the small pipe diameter, in some embodiments, the first valve 121 and the second valve 122 can be mechanically connected through a DN300 pipe.

In some embodiments, as shown in FIG. 2, the cooling tower performance testing device further includes a fifth barrier member 15. The fifth barrier member 15 is disposed between the sixth valve 82 and the first EHR inlet valve 34; the fifth barrier member 15 is used to block the cooling water output from the hot side water outlet of the ECS heat exchanger 41 from flowing back to the water outlet of the RRI heat exchanger 61 during the performance testing, thereby allowing the cooling water to flow back to the water inlet of the RRI main pump 62 via the PTR heat exchanger 51 and the PTR outlet valve 53. Specifically, the fifth barrier member 15 is closed during the performance testing, blocking the cooling water output from the hot side water outlet of the ECS heat exchanger 41 from flowing back to the water outlet of the RRI heat exchanger 61, thereby allowing all the water from the hot side water outlet of the ECS heat exchanger 41 to flow back to the water inlet of the RRI main pump 62 via the PTR heat exchanger 51 and the PTR outlet valve 53.

Referring to FIG. 2, in this embodiment, the principle by which the ECS cooling tower 47 acquires heat from the primary circuit during the performance testing is as follows: First, one row of the RRI main pumps 62 is operated, and the two third valves 64 on that row are opened, and the fourth valve 23 is opened. The RRI main pump 62 will deliver cooling water to the RIS-RHR heat exchanger 21 for heating. Then, the first barrier member 11 remains closed, and the heat source acquisition assembly 12 remains open (i.e., both the first valve 121 and the second valve 122 are open), so that the heated cooling water is input to the EHR gate valve 31 only through the heat source acquisition assembly 12. At this time, under the blocking effect of the third barrier member 17, the second barrier member 13, and the fourth barrier member 14, the cooling water can be output only from the outlet of the EHR gate valve 31 and input to the hot side water inlet of the ECS heat exchanger 41 through the outlet water pipe of the EHR gate valve 31. At this time, the hot side of the ECS heat exchanger 41 acquires heated cooling water, and its hot side and cold side exchange heat, thus heating the cooling water on the cold side of the ECS heat exchanger 41, thereby providing the cooling tower with the heat required for performance testing. Then, since the first EHR inlet valve 34, the second EHR inlet valve 35, the first PTR inlet valve 52, and the second PTR inlet valve 54 remain open during the test, and the fifth barrier member 15 remains closed, the cooling water after cooling output from the hot side water outlet of the ECS heat exchanger 41 is delivered to the water inlet of the PTR heat exchanger 51 only via the ECS intermediate loop circulation pump 43 and a series of valves. Finally, since the PTR outlet valve 53 remains open during the test, the cooling water after cooling flows back to the water inlet of the RRI main pump 62 through the outlet water pipe of the PTR outlet valve 53, thus completing the entire cooling water circulation. In addition, during performance testing, the ECS intermediate loop circulation pump 43 can remain operating to ensure that the cooling water in the system of the present invention has sufficient power for circulation.

Understandably, in this embodiment, except for the heat source acquisition assembly 12, most of the paths of the cooling water flow through the pipelines belong to the existing pipelines in each heat exchange system. Therefore, this embodiment can minimize the laying of temporary pipelines. In terms of pressure, the pressure range of the ECS intermediate loop is 0~2.9MPa(g), while the cooling water pressure output by the RRI main pump 62 is generally around 1MPa(g). Therefore, taking water from the RRI system will not exceed the pressure range of the ECS intermediate loop, which meets the nuclear power safety requirements. Furthermore, the PTR heat exchanger 51 in the high-flow cooling mode can reach a cooling water flow rate of 820m³/h, while the actual flow rate of the ECS intermediate loop circulation pump 43 is generally around 812.4m³/h. Therefore, the cooling water output from the hot side water outlet of the ECS heat exchanger 41 can flow back to the water inlet of the RRI main pump 62 all via the PTR heat exchanger 51. In terms of flow rate, since the cooling water flow rate of the RIS-RHR heat exchanger 21 (generally around 849.6 m³/h) is close to the actual operating flow rate of the ECS intermediate loop, during the thermal performance testing, the exchange of cooling water between the RIS-RHR heat exchanger 21 and the ECS heat exchanger 41 will not affect the normal cooling task of the RIS-RHR heat exchanger 21, ensuring stable operation of the primary circuit during the thermal performance testing. In terms of temperature, since the temperature of the ECS intermediate loop is generally around 90°C, while the maximum temperature of output cooling water of the RIS-RHR heat exchanger 21 is 61.5°C, there is no need to worry that the high temperature of cooling water will affect the ECS intermediate loop when taking water from the RIS-RHR heat exchanger 21, thus meeting the requirements for long-term stable operation of the ECS intermediate loop. Regarding the impact on other systems, since the systems such as chemical and volume control system can also be normally cooled by the two rows of RRI systems during the test, there is no risk of uncontrollable pressure of the primary circuit water when one row of RRI is lost. Understandably, this embodiment enables performance testing to minimize disruption to the normal operation of various heat exchange systems. As long as the heat source acquisition assembly 12 is shut off (i.e., the first valve 121 and/or the second valve 122 are closed), the independent operation of the RRI system and ECS system can be quickly restored, minimizing the impact on the main project schedule and reducing testing costs.

In some embodiments, the first barrier member 11, the second barrier member 13, the fourth barrier member 14, and the fifth barrier member 15 can all be electric valves.

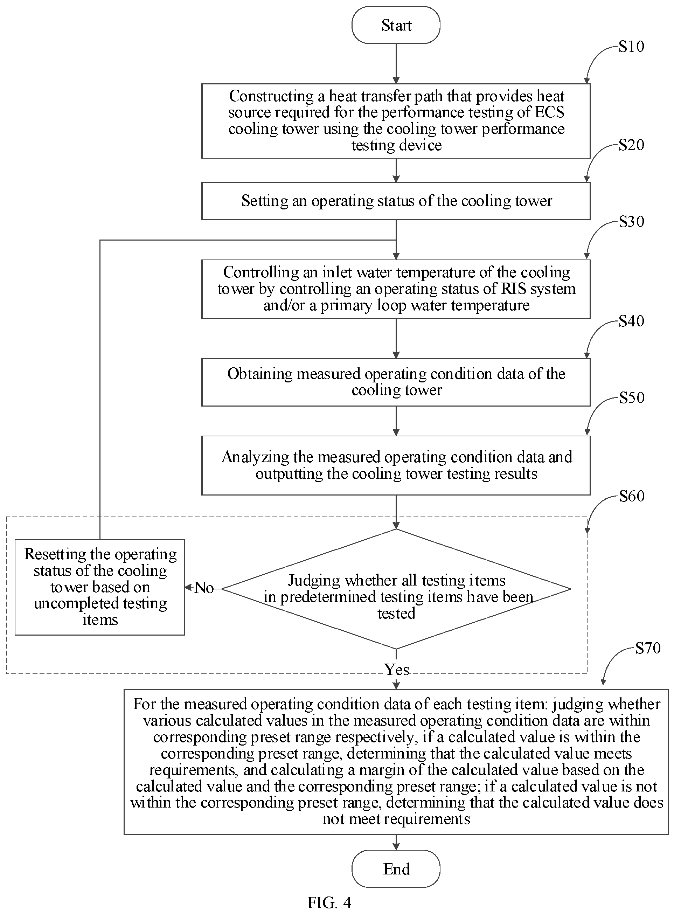

As shown in FIG. 4, the present invention also provides a cooling tower performance testing method, which includes steps S10, S20, S30, S40 and S50.

Step S10 includes: constructing a heat transfer path that provides heat source required for the performance testing of the ECS cooling tower 47 using the cooling tower performance testing device. In this step, the heat transfer path can be constructed using the cooling tower performance testing device provided in the embodiment of the invention.

Step S20 includes: setting an operating status of the cooling tower. In this step, the operating status of the cooling tower may include, but is not limited to, a circulating water volume and a water baffle plate status of the cooling tower. The setting range of the circulating water volume is 270t/h to 330t/h, and the baffle status can be either with a water baffle or without a water baffle. The circulating water volume is one of the parameters that controls the heat load of the cooling tower. In the cooling tower, the water baffle plate is usually set above the spray fill to prevent water from falling from the edge gaps, thereby preventing the water from failing to exchange heat sufficiently with the air. Therefore, whether or not a water baffle plate is set will affect the cooling performance of the cooling tower.

Step S30 includes: controlling an inlet water temperature of the cooling tower by controlling an operating status of the RIS system and/or the primary circuit water temperature. In this step, the operating status of the RIS system and/or the primary circuit water temperature can be controlled through the digital instrumentation and control system (DCS system) of nuclear power plant, thereby controlling the cooling water temperature of the heat source acquisition assembly 12 input to the RIS-RHR heat exchanger 21, which controls the cooling water temperature input to the hot side water inlet of the ECS heat exchanger 41. Since the water temperature on the hot side of the ECS heat exchanger 41 is positively correlated with its cold side water temperature, controlling the water temperature on the hot side of the ECS heat exchanger 41 is equivalent to controlling the inlet water temperature of the cooling tower.

In nuclear power plants, a typical single cooling tower needs to discharge a maximum heat load of 7.947 MW. Assuming a deviation of no more than 20%, the heat load a single cooling tower can remove during testing ranges from 6.357 MW to 9.537 MW. According to existing design documents, the outlet water temperature of the cooling tower must be limited to below 34.35°C. If calculated based on the minimum heat load of 6.357 MW and an outlet water temperature of 34.35°C, the inlet water temperature of the cooling tower must be greater than 52.7°C. However, to comply with cooling tower testing regulations and avoid overloading, the outlet water temperature difference cannot deviate from the design value by more than 20%. Therefore, with an outlet water temperature of 34.35°C, the inlet water temperature must not exceed 54.51°C. Thus, the inlet water temperature of the cooling tower can be controlled between 52.7°C and 54.51°C.

In addition, to avoid overloading of the cooling tower and conducting tests overly conservative, the heat load can be set at 6.67 MW as the calculated value of the heat that the cooling tower needs to remove during the test. In this way, the inlet water temperature can be controlled at around 53.6°C. Since the heat exchange efficiency of ECS heat exchanger 41 and RIS-RHR heat exchanger 21 is known, after determining the inlet water temperature, the water temperature entering the hot side water inlet of the RIS-RHR heat exchanger can be calculated based on the heat exchange efficiency. Taking a nuclear power plant as an example, when the required inlet temperature is 53.6°C, the corresponding hot side water inlet water temperature of the RIS-RHR heat exchanger is 70°C. That is, the hot side water inlet water temperature of the RIS-RHR heat exchanger can be kept at around 70°C by controlling the operating status of the RIS system (such as adjusting the cooling water flow rate of RIS-RHR heat exchanger 21) and/or the primary circuit water temperature, so as to complete the thermal performance testing.

Step S40 includes: obtaining measured operating condition data of the cooling tower. The measured operating condition data includes, but is not limited to, ambient wet-bulb temperature, ambient dry-bulb temperature, inlet wet-bulb temperature, inlet dry-bulb temperature, outlet dry-bulb temperature, outlet wet-bulb temperature, atmospheric pressure, measured circulating water flow rate, inlet water temperature, outlet water temperature, inlet air flow rate, fan inlet face pressure, fan outlet face pressure, fill bottom face pressure, fill top face pressure, drift eliminator face pressure, cooling tower outlet face pressure, outlet water temperature face pressure, noise, fan shaft power, water drenching density, cooling tower spray fill volume, and N sets of drift water data, as well as filter paper area. In addition, N is a natural number.

The ambient wet-bulb temperature, ambient dry-bulb temperature, inlet wet-bulb temperature, inlet dry-bulb temperature, outlet dry-bulb temperature and outlet wet-bulb temperature can be measured at the corresponding locations on the cooling tower using a DHM2 type mechanical ventilation Assmann wet-bulb and dry-bulb thermometer or a multi-point thermal resistance thermometer. For example, the ambient wet-bulb temperature and ambient dry-bulb temperature can be measured outside the air inlet of the cooling tower, while the inlet wet-bulb temperature and inlet dry-bulb temperature can be measured above the air inlet of the cooling tower.

The atmospheric pressure can be measured in the ambient space outside the cooling tower using a digital pressure gauge.

The measured circulating water flow rate can be measured using an ultrasonic flow meter of model Controlotron-1010P on the upstream and downstream water delivery pipelines of the cooling tower.

The inlet water temperature and outlet water temperature can be measured using existing thermometers.

The inlet air flow rate can be measured by placing an impeller anemometer above the air outlet of the cooling tower or at the air inlet of the fan, using the equal-area annulus method.

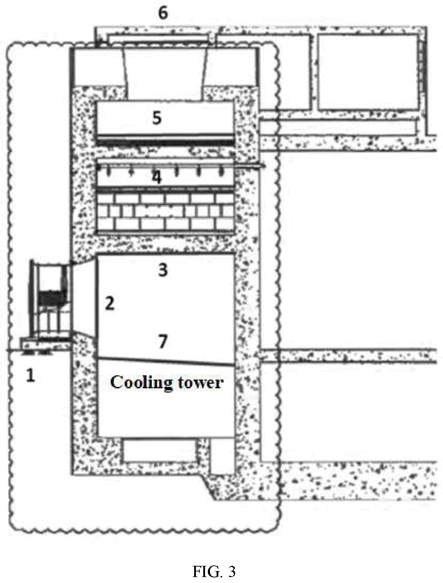

The fan inlet face pressure, fan outlet face pressure, fill bottom face pressure, fill top face pressure, drift eliminator face pressure, cooling tower outlet face pressure and outlet water temperature face pressure can be obtained using existing methods with micromanometers. FIG. 3 is a location diagram of a cooling tower in a nuclear power plant at different testing faces. In the figure, reference sign 1 corresponds to the fan inlet face, reference sign 2 corresponds to the fan outlet face, reference sign 3 corresponds to the fill bottom face, reference sign 4 corresponds to the fill top face, reference sign 5 corresponds to the drift eliminator face, reference sign 6 corresponds to the cooling tower outlet face, and reference sign 7 corresponds to the outlet water temperature face. It is understandable that worker can use a micromanometer to measure the corresponding face pressure.

Noise can be measured at the fan inlet or outlet of the cooling tower using a noise meter.

The fan shaft power can be measured at the fan power supply of the cooling tower using a power meter or a wattmeter.

The water drenching density can be measured using existing cooling tower water drenching density measuring devices.

The cooling tower spray fill volume is a designable parameter of the cooling tower, so it can be obtained directly from operating parameter data table of the cooling tower, and it can also be calculated using existing methods for measuring the spray fill volume .

N sets of drift water data can be obtained by multiple collections based on the filter paper weighing method. Each set of drift water data includes filter paper weight before each water droplet collection, filter paper weight after each water droplet collection, sampling time of each water droplet collection, and drift water volume of each water droplet collection. Since the same filter paper is used for each drift water data collection, the filter paper area can be considered as a constant.

Step S50 includes: analyzing the measured operating condition data and outputting the cooling tower testing results.

In some embodiments, analyzing measured operating condition data may include: calculating a calculated water temperature difference based on the ambient dry-bulb temperature, the ambient wet-bulb temperature, the atmospheric pressure, the measured circulating water flow rate and inlet water temperature; and calculating a cooling capacity coefficient for evaluating the actual cooling capacity of the cooling tower based on the calculated water temperature difference, outlet water temperature, inlet water temperature, and actual inlet water temperature difference.

Furthermore, the cooling capacity coefficient can be calculated using the following formula:
${η}_{st} = \frac{{Δt}_{r}}{{Δt}_{d}} \times 100 % ;$

Wherein, ηₛₜ represents the cooling capacity coefficient, Δtᵣ represents the actual inlet water temperature difference (equal to the outlet water temperature minus the inlet water temperature), and Δt_{d} represents the calculated water temperature difference. It should be noted that the calculated water temperature difference can be obtained using existing algorithms based on the ambient dry-bulb temperature, the ambient wet-bulb temperature, the atmospheric pressure and the measured circulating water flow rate, which will not be elaborated here.

In some embodiments, analyzing the measured operating condition data may further include: calculating a thermal balance error used to evaluate the thermal balance performance of the cooling tower based on the inlet air flow rate, the inlet dry-bulb temperature, the inlet wet-bulb temperature, the measured circulating water flow rate, the outlet dry-bulb temperature and the outlet wet-bulb temperature.

Furthermore, the thermal balance error can be calculated using the following formula:
$Δε = \left[1-\frac{{G}_{a} \left({h}_{2}-{h}_{1}\right)}{{C}_{w} {Q}_{t} \left({t}_{1}-{t}_{2}\right)}\right] \times 100 % ;$

Wherein, Δε represents the thermal balance error, Gₐ represents the inlet air flow rate, h₁ represents the inlet wet air specific enthalpy (calculated based on the inlet dry-bulb temperature and the inlet wet-bulb temperature), h₂ represents the outlet wet air specific enthalpy (calculated based on the outlet dry-bulb temperature and the outlet wet-bulb temperature), C_{w} represents the specific heat capacity of water, Qₜ represents the measured circulating water flow rate, t₁ represents the inlet water temperature, and t₂ represents the outlet water temperature.

In some embodiments, analyzing the measured operating condition data may further include: calculating a cooling number for evaluating the cooling performance of the cooling tower based on the inlet water temperature, outlet water temperature, inlet air flow rate, inlet dry-bulb temperature, inlet wet-bulb temperature, outlet dry-bulb temperature, and outlet wet-bulb temperature.

Furthermore, the cooling number can be calculated using the following formula:
$\left\{\begin{matrix}Ω = \frac{{C}_{w} Δt}{6} \left(\frac{1}{{h}_{2}^{"} - {h}_{1}}+\frac{4}{{h}_{m}^{"} - {h}_{m}}+\frac{1}{{h}_{1}^{"} - {h}_{2}}\right) \\ {h}_{m} = \frac{{h}_{1} + {h}_{2}}{2} \\ {h}_{m}^{"} = \frac{{h}_{1}^{"} + {h}_{2}^{"}}{2} \\ Δt = {t}_{1} - {t}_{2}\end{matrix}\right. ;$

Wherein, Ω represents the cooling number, hₘ represents the average of the inlet wet air specific enthalpy and the outlet wet air specific enthalpy, h₁^{"} represents a saturated air enthalpy at a temperature equivalent to the inlet water temperature (which can be calculated from the inlet wet air specific enthalpy and the inlet water temperature), and h₂^{"} represents a saturated air enthalpy at a temperature equivalent to the outlet water temperature (which can be calculated from the outlet wet air specific enthalpy and the outlet water temperature).

In some embodiments, analyzing the measured operating condition data may further include: calculating a volumetric dispersion coefficient of the cooling tower based on the measured circulating water flow rate, the cooling tower spray fill volume and the cooling number.

Furthermore, the volumetric dispersion coefficient can be calculated using the following formula:
${K}_{a} = \frac{{Q}_{t} Ω}{V} ;$

Wherein, Kₐ represents the volumetric dispersion coefficient and V represents the cooling number.

In some embodiments, analyzing the measured operating condition data may further include: calculating a drifting ratio of the cooling tower based on the water drenching density, the filter paper area, and N sets of drift water data.

Furthermore, the volumetric mass transfer factor can be calculated using the following formula:
$\left\{\begin{matrix}{S}_{i} = \frac{{M}_{2} - {M}_{1}}{t} \\ \overline{S} = \frac{1}{N} {\sum }_{i = 1}^{N} {S}_{i} \\ e = \frac{3.6}{1000} \times \frac{\overline{S}}{aq}\end{matrix}\right. ;$

Wherein, Sᵢ represents drift water volume at point i, M₁ represents the filter paper weight before water droplet collection at point i, M₂ represents the weight of the filter paper after collecting water droplets at point i, t represents the sampling time for collecting the drift water volume at point i, S̅ represents the average drift water volume, N represents the total number of measurement points (i.e., the total number of sets of drift water data), e represents the drifting ratio, a represents the filter paper area, and q represents the water drenching density.

In some embodiments, analyzing the measured operating condition data may further include: calculating the pressure of each component of the cooling tower sequentially based on the fan inlet face pressure, the fan outlet face pressure, the fill bottom face pressure, the fill top face pressure, the drift eliminator face pressure, the cooling tower outlet face pressure, and the outlet water temperature face pressure.

Furthermore, the resistance between components can be calculated using the following formula:
${ΔP}_{i} = {P}_{i} - {P}_{i + 1} ;$

Wherein, ΔPᵢ represents the resistance of a component, Pᵢ represents the pressure at the i-th face, and Pᵢ₊₁ represents the pressure at the (i+1)-th face.

In some embodiments, analyzing the measured operating condition data may further include: judging whether the noise is greater than a set noise value, and if so, determining that the cooling tower noise is too loud.

In some embodiments, analyzing the measured operating condition data may further include: judging whether the fan shaft power is within a preset range, and if so, determining that the cooling tower fan is operating normally.

To more comprehensively test the thermal performance of the cooling tower, in some embodiments, step S50 may be followed by step S60 and step S70.

Step S60 includes: judging whether all testing items in the predetermined testing items have been tested. If so, executing to step S70; otherwise, resetting the operating status of the cooling tower based on the uncompleted testing items in the predetermined testing items and returning to step S30. Specifically, the predetermined testing items may include several testing items, each of which can be designed in advance by workers. The design content includes, but is not limited to, the circulating water volume and the water baffle plate status of the cooling tower. In this embodiment, when all testing items are completed, multiple sets of cooling tower testing results will be obtained, which will facilitate the worker to analyze and evaluate the heat exchange performance of the cooling tower under different operating conditions.

In some embodiments, the predetermined testing items can be specified using the parameters shown in Table 1.

**Table 1**

| Testing item number | Circulating water volume (t/h) | Water baffle plate status |
|---|---|---|
| 1 | 330 | With a water baffle plate |
| 2 | 300 | With a water baffle plate |
| 3 | 270 | With a water baffle plate |
| 4 | 330 | Without a water baffle plate |
| 5 | 300 | Without a water baffle plate |
| 6 | 270 | Without a water baffle plate |

In this embodiment, by setting the circulating water volume to the lowest value, highest value and intermediate value within the settable range, and by setting a water baffle and without a water baffle, the cooling tower is subjected to thermal performance testing under a total of six different conditions. This allows for a more comprehensive test and evaluation of the cooling tower performance, improving the accuracy and reliability of the test.

Step S70 includes: for the measured operating condition data of each testing item: judging whether the various calculated values in the measured operating condition data are within the corresponding preset range respectively, if a calculated value is within the corresponding preset range, determining that the calculated value meets the requirements, and calculating a margin of the calculated value based on the calculated value and the corresponding preset range; if a calculated value is not within the corresponding preset range, determining that the calculated value does not meet the requirements. Specifically, the various calculated values in the measured operating condition data can include the calculation results of cooling capacity coefficient, thermal balance error, cooling number, volumetric dispersion coefficient, drifting ratio, and resistance of each component. The relevant preset range can be determined according to the type of calculated value. Taking the cooling capacity coefficient as an example, it is judged whether the calculated value of the cooling capacity coefficient is within the preset range of the cooling capacity coefficient. If so, the cooling capacity coefficient is determined to meet the requirements. Then, the difference between the calculated value of the cooling capacity coefficient and the upper and lower values of the preset range of the cooling capacity coefficient is calculated to obtain the margin (the margin is characterized by the size of the difference). It should be noted that the preset range corresponding to each calculated value can be set according to actual needs, and there are no restrictions here.

The various embodiments in this description are described in a progressive manner, with each embodiment focusing on the differences from other embodiments. The same or similar parts between the various embodiments can be referred to each other. The device disclosed in the embodiments is described simply because it corresponds to the method disclosed in the embodiments; relevant details can be referred to the method section.

It is understood that the above embodiments only illustrate preferred embodiments of the present invention, and their descriptions are relatively specific and detailed, but they should not be construed as limiting the scope of the present invention. It should be noted that those skilled in the art can freely combine the above technical features without departing from the concept of the present invention, and can also make several modifications and improvements, all of which fall within the protection scope of the present invention. Therefore, all equivalent transformations and modifications made with respect to the scope of the claims of the present invention should fall within the scope of the claims of the present invention.

## Claims

1. A cooling tower performance testing device, comprising:
a first barrier member (11), provided on an outlet water pipe of a RIS-RHR heat exchanger (21), used to block delivery of cooling water heated by the RIS-RHR heat exchanger (21) to a downstream pipe of an outlet water pipe of the RIS-RHR heat exchanger (21) during performance testing;
a heat source acquisition assembly (12), a first end of which mechanically connected between the first barrier member (11) and a water outlet of the RIS-RHR heat exchanger (21), a second end of which mechanically connected to an EHR gate valve (31), used to acquire the cooling water output by the RIS-RHR heat exchanger (21) during the performance testing so that the cooling water is delivered to a hot side water inlet of an ECS heat exchanger (41) through an outlet water pipe of the EHR gate valve (31);
and
a second barrier member (13), provided on the pipeline between a water outlet of a PTR heat exchanger (51) and the hot side water inlet of the ECS heat exchanger (41), used to prevent cooling water from flowing back to the water outlet of the PTR heat exchanger (51) during performance testing.

2. The cooling tower performance testing device according to claim 1, wherein the heat source acquisition assembly (12) comprises:
a first valve (121), a first end of which mechanically connected between the first barrier member (11) and the water outlet of the RIS-RHR heat exchanger (21), and a second end of which mechanically connected to a valve core outlet of the EHR gate valve (31).

3. The cooling tower performance testing device according to claim 2, wherein the first end of the first valve (121) is mechanically connected to a valve core outlet of a RIS check valve (22) disposed between the first barrier member (11) and the water outlet of the RIS-RHR heat exchanger (21).

4. The cooling tower performance testing device according to claim 3, wherein the heat source acquisition assembly (12) further comprises a second valve (122); the second end of the first valve (121) is mechanically connected to the valve core outlet of the EHR gate valve (31) through the second valve (122);
the cooling tower performance testing device further comprises:
a third barrier member (17), detachably mounted within an EHR restriction orifice (32), used to block the flow of cooling water from ECS loop back through an EHR heat exchanger (33) to the hot side water inlet of the ECS heat exchanger (41) during performance testing; and
a fourth barrier member (14), provided on the outlet water pipe of the EHR restriction orifice (32) to prevent cooling water from flowing back to a water inlet of a RRI main pump (62) through a water inlet of the EHR gate valve (31) during the performance testing.

5. The cooling tower performance testing device according to claim 4, wherein the first valve (121) and the second valve (122) are mechanically connected through a DN300 pipe.

6. The cooling tower performance testing device according to claim 4, wherein the third barrier member (17) is a blind plate; and/or, the first barrier member (11), the second barrier member (13) and the fourth barrier member (14) are electric valves.

7. The cooling tower performance testing device according to claim 4, wherein the first valve (121) and the second valve (122) are flanged valves respectively.

8. The cooling tower performance testing device according to any one of claims 1 to 7, further comprising:
a fifth barrier member (15), provided between a sixth valve (82) and a first EHR inlet valve (34), used to prevent cooling water output from a hot side water outlet of the ECS heat exchanger (41) from flowing back to a water outlet of a RRI heat exchanger (61) during the performance testing, thereby allowing the cooling water to flow back to the water inlet of the RRI main pump (62) through the PTR heat exchanger (51) and a PTR outlet valve (53).

9. A cooling tower performance testing method, comprising the following steps:
S10. constructing a heat transfer path that provides heat source required for the performance testing of ECS cooling tower (47) using the cooling tower performance testing device according to any one of claims 1 to 8;
S20. setting an operating status of the cooling tower;
S30. controlling an inlet water temperature of the cooling tower by controlling an operating status of RIS system and/or a primary circuit water temperature;
S40. obtaining measured operating condition data of the cooling tower;
S50. analyzing the measured operating condition data and outputting the cooling tower testing results.

10. The cooling tower performance testing method according to claim 9, wherein controlling an inlet water temperature of the cooling tower comprises: controlling the inlet water temperature between 52.7°C and 54.51°C.

11. The cooling tower performance testing method according to claim 9, wherein setting an operating state of the cooling tower comprises:
setting circulating water volume and a water baffle plate status of the cooling tower; wherein, a setting range of the circulating water volume is 270t/h to 330t/h, and the water baffle status is either with a water baffle or without a water baffle.

12. The cooling tower performance testing method according to claim 9, wherein the measured operating condition data comprises an ambient dry-bulb temperature, an ambient wet-bulb temperature, an atmospheric pressure, a measured circulating water flow rate, an inlet water temperature, an outlet water temperature, an inlet air flow rate, an inlet dry-bulb temperature, an inlet wet-bulb temperature, an outlet dry-bulb temperature, and an outlet wet-bulb temperature;
analyzing the measured operating condition data comprises:
calculating a calculated water temperature difference based on the ambient dry-bulb temperature, the ambient wet-bulb temperature, the atmospheric pressure, the measured circulating water flow rate and the inlet water temperature, and then calculating a cooling capacity coefficient used to evaluate actual cooling capacity of the cooling tower based on the calculated water temperature difference, the inlet water temperature and the outlet water temperature;
calculating a thermal balance error used to evaluate thermal balance performance of the cooling tower based on the inlet air flow rate, the inlet dry-bulb temperature, the inlet wet-bulb temperature, the measured circulating water flow rate, the outlet dry-bulb temperature and the outlet wet-bulb temperature; and
calculating a cooling number used to evaluate cooling performance of the cooling tower based on the inlet water temperature, the outlet water temperature, the inlet air flow rate, the inlet dry-bulb temperature, the inlet wet-bulb temperature, the outlet dry-bulb temperature and the outlet wet-bulb temperature.

13. The cooling tower performance testing method according to claim 12, wherein the measured operating condition data further comprises a cooling tower spray fill volume, a fan inlet face pressure, a fan outlet face pressure, a fill bottom face pressure, a fill top face pressure, a drift eliminator face pressure, a cooling tower outlet face pressure, an outlet water temperature face pressure, a water drenching density, N sets of drift water data obtained by multiple collections based on the filter paper weighing method, and a filter paper area; wherein, each set of drift water data comprises a filter paper weight before each water droplet collection, a filter paper weight after each water droplet collection, a sampling time of each water droplet collection, and a drift water volume of each water droplet collection;
analyzing the measured operating condition data further comprises:
calculating a volumetric dispersion coefficient of the cooling tower based on the measured circulating water flow rate, the cooling tower spray fill volume and the cooling number;
calculating resistance of each component of the cooling tower sequentially based on the fan inlet face pressure, the fan outlet face pressure, the fill bottom face pressure, the fill top face pressure, the drift eliminator face pressure, the cooling tower outlet face pressure and the outlet water temperature face pressure;
calculating a drifting ratio of the cooling tower based on the water drenching density, the filter paper area, and N sets of drift water data.

14. The cooling tower performance testing method according to claim 12 or 13, further comprising:
S60. judging whether all testing items in predetermined testing items have been tested, if so, executing to S70; otherwise, resetting the operating status of the cooling tower based on uncompleted testing items in the predetermined testing items and returning to S30;
S70. for the measured operating condition data of each testing item: judging whether various calculated values in the measured operating condition data are within corresponding preset range respectively, if a calculated value is within the corresponding preset range, determining that the calculated value meets requirements, and calculating a margin of the calculated value based on the calculated value and the corresponding preset range; if a calculated value is not within the corresponding preset range, determining that the calculated value does not meet requirements.
